# EUROPEAN PATENT APPLICATION

(11) **EP 1 743 758 A2**
(43) Date of publication of application: **17.01.2007**
(21) Application number: 06253629.7
(22) Date of filing: 11.07.2006
(51) Int. Cl.: B29C 65/52, B29C 65/14, B29C 65/50, B29C 65/10, B29L 31/26, B29L 31/30, B60J 10/08

(54) **Bonding of sealing, trimming or guiding strips**

(30) Priority: 12.07.2005 GB 0514297; 17.08.2005 GB 0516890
(71) Applicant: GDX North America Inc., Dover Delaware 19901 (US); AUDI AG, 85057 Ingolstadt (DE)
(72) Inventor: Dragon, Horst, 41065 Moenchengladbach (DE); Blum, Rocco, 74670 Forchtenberg (DE)
(74) Representative: Foster, Mark Charles

(57) **Abstract**

A boot/trunk opening 1 in the vehicle body 3 has a flange 5 to which a looped sealing strip should be attached. However, when the boot/trunk lid 29 is fixed to the vehicle body 3 by hinge arms 27, these hinge arms prevent a pre-formed loop-shaped sealing strip being satisfactorily fitted to the flange 5. Disclosed herein is a sealing strip having a heat-bonding air-permeable foil attached to one end thereof. A sealing strip of this type can be supplied in strip form and threaded between the hinge arms 27 and the vehicle body 3. The end of the sealing strip to which the foil is already attached is then bonded to the other end of the sealing strip by a bonding operation performed at the vehicle to form a looped sealing strip. An apparatus and method for performing this *in situ* bonding operation is disclosed. Apparatus for forming a sealing strip with a foil attached to one end thereof is also disclosed.

## Description

The present invention relates to a sealing, trimming or guiding strip, apparatus for forming such a strip, apparatus for bonding together the opposite ends of such a strip to form a loop-like strip, and corresponding methods. The strips are particularly, though not exclusively, for use on motor vehicle bodies such as the sealing around a boot or trunk or other closable opening of a vehicle.

It is known to provide pre-formed loop-shaped sealing strips for fitment around closable openings of a vehicle such as around a boot or trunk opening). These can be fitted relatively simply to a flange around the opening when the boot/trunk lid is not fitted to the vehicle body (such as during manufacture of the vehicle). However, after manufacture of the vehicle such sealing strips cannot be fitted satisfactorily because the hinge arms that attach the boot/trunk lid to the vehicle body form an obstruction. The known solution of providing a length of sealing strip and fitting this around the flange of the opening and leaving the opposite ends of the length of strip abutting or adjacent is unsatisfactory because this reduces the effectiveness of the seal and provides an unattractive appearance.

According to a first aspect of the invention, there is provided a sealing, trimming or guiding strip having an end face with one surface of a heat-bonding sheet of material bonded to said end face, the other surface of the sheet being unbonded and available for subsequent bonding to another end face.

According to a second aspect of the invention, there is provided apparatus for forming a sealing, trimming or guiding strip with a heat-bonding sheet of material at an end face thereof, the apparatus including clamping means for positioning the strip, means for providing the sheet of material in the region of the end face, means for heating the end face of the strip and/or the sheet of material, and means for pressing the sheet of material against the end face of the strip, such that the strip is formed with the sheet of material bonded to one end face only thereof.

According to a third aspect of the invention, there is provided a method for forming a sealing, trimming or guiding strip with a heat-bonding sheet of material at an end face thereof, the method including clamping the strip in position, providing the sheet of material in the region of the end face of the strip, heating the end face of the strip and/or the sheet of material, and pressing the sheet of material against the end face of the strip, such that the strip is formed with the sheet of material bonded to one end face only thereof.

According to a fourth aspect of the invention, there is provided apparatus for forming a looped sealing, trimming or guiding strip from a length of strip having first and second ends, the first end having an end face with a heat-bonding sheet of material bonded to that end face, the apparatus including means for positioning the first and second ends of the strip so that the end faces thereof are generally aligned, means for applying heat to at least one of the respective end faces and/or the sheet of material, and means for pressing the first and second ends of the strip together such that the sheet of material bonds the ends of the strips together, thereby forming said loop.

According to a fifth aspect of the invention, there is provided method of sealing around an opening in a motor vehicle body having an obstruction in the region of the opening, the method including providing a sealing strip having first and second ends, the first end having an end face with a heat bonding sheet of material bonded to that end face, positioning the strip around the obstruction, bonding the first end of the strip to the second end of the strip using the sheet of material by applying heat thereto, and mounting the thus formed looped strip to a mount around the periphery of the opening.

A sealing, trimming or guiding strip embodying the invention, a tool and method for forming such a strip embodying the invention, and apparatus and methods for providing *in situ* forming of a loop-shaped sealing strip, will now be described, by way of example, with reference to the accompanying diagrammatic drawings in which:-
Figure 1 is an overhead plan view of the boot/trunk opening of the vehicle body;
Figure 2 is an overhead plan view of a pre-formed loop-shaped sealing strip of known configuration;
Figure 3 is a detailed view of the strip of Figure 2;
Figure 4 is a cut-away view of the sealing strip of Figures 2 and 3;
Figure 5 is a partial perspective view of a boot/trunk lid and boot/trunk lid opening of a motor vehicle;
Figure 6 is a view of part of a sealing strip in accordance with an embodiment of the invention;
Figure 7 is a perspective view of one form of apparatus for forming the seal of Figure 6;
Figure 8 is a scrap plan view of part of the apparatus of Figure 7;
Figure 9 is a perspective view of a first embodiment of apparatus for forming a loop-shaped strip *in situ;*
Figure 10 is a close-up view of part of the apparatus of Figure 9;
Figure 11 is a scrap plan view of part of the apparatus of Figures 9 and 10;
Figure 12 is a front elevational view of apparatus of a second embodiment of the invention for forming a loop-shaped seal *in situ*;
Figure 13 is an enlarged view of part of the apparatus of Figure 12; and
Figure 14 is a side elevational view of the apparatus of Figures 12 and 13 and a motor vehicle body.

In the Figures like elements are generally designated with the same reference numerals.

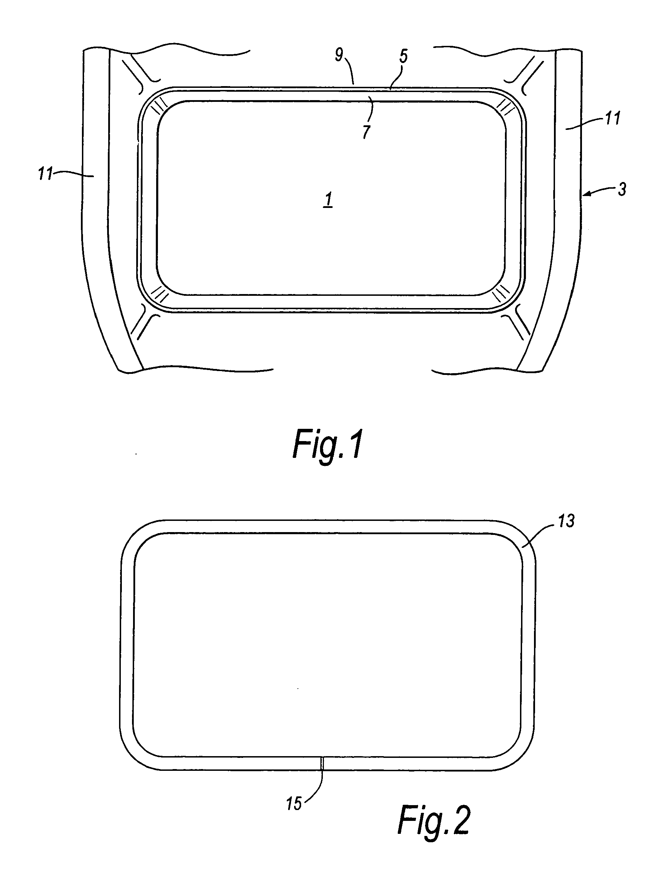

Figure 1 shows an overhead plan view of the boot/trunk opening 1 in a motor vehicle body 3. Around the opening a mount or flange 5 is formed where an outer body panel 7 and an inner body panel 9 meet. These body panels 7 and 9 may be joined at the flange 5 by adhesive, spot welding or any other suitable technique. The inner panel 9 is formed from the same sheet of material that forms the rear wings 11 of the motor vehicle 3.

A boot/trunk lid is mounted on the vehicle body 3 for closing the opening 1 in the conventional manner. In order to provide a weather tight seal for the opening 1, a sealing strip 13 (Figure 2) is mounted over the flange 5 and extends therearound to form a loop.

In order to provide a sealing strip 13 that is in the form of a loop, it is known to form a length of sealing strip to the desired length and to join the opposite ends 13A, 13B thereof using a thermoplastic foil or film 15. A sealing strip having such an arrangement and an apparatus for joining the opposite ends of the sealing strip is disclosed in EP 1284852.

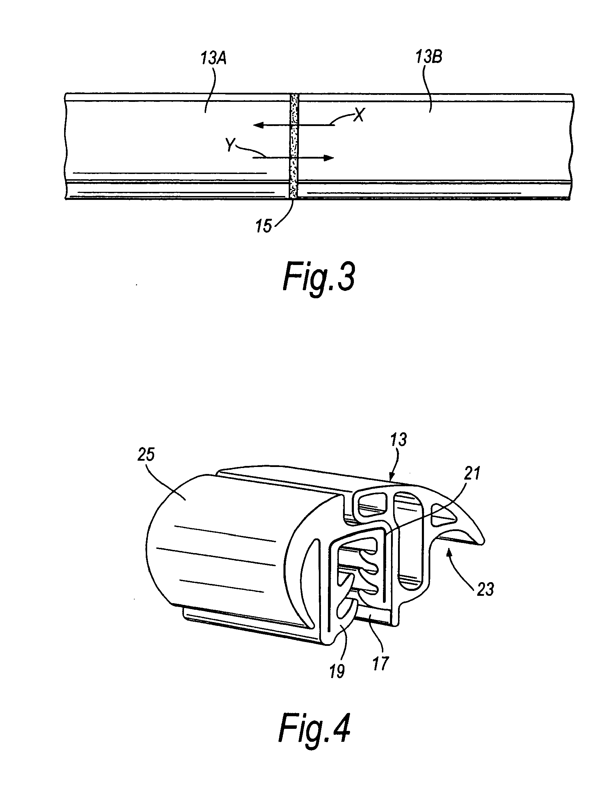

Figure 3 shows a partial view of the sealing strip 13. The sealing strip 13 comprises extruded plastics or rubber or similar material defining a channel 17 which, in use, embracingly grips the flange 5. The extruded material preferably defines integral gripping lips 19 extending across the interior of the channel 17 from opposite facing sidewalls thereof, these lips 19 frictionally contacting the flange 5 in use to help secure the strip 13 in position thereon. The extruded material defining the channel 17 may be reinforced by a channel-shaped embedded resilient core or carrier 21 such as made of metal or other suitable rigid material. The sealing strip 13 carries a relatively soft sealing part 23 having a hollow chamber extending from the outside of the base and one sidewall of the channel 17. When the sealing strip 13 is mounted on the flange 5, this sealing part 23 is positioned so as to be partially compressed by the closing boot/trunk lid, thus providing a weather seal around the opening 1. A so-called "cosmetic lip" 25 may extend over the outside of the opposite sidewall of the channel 8 for receiving and hiding the edge of a trim panel, although typically such a cosmetic lip 25 will not be provided for a boot/trunk seal (although will typically be provided for a door seal).

Figure 3 shows in more detail the region of the sealing strip 13 where the foil 15 joins the opposite ends 13A, 13B thereof.

According to a known assembling arrangement, seals in the form of loops as shown in Figure 2 are supplied to vehicle manufacturers for fitting to flanges 5 around boot/trunk openings 1 during the manufacture of vehicles.

It is advantageous to join the opposite ends 13A, 13B of the seal 13 by foil 15, in contrast to an arrangement where the ends are not joined but simply abut one another or lie adjacent to one another, because this provides a more effective weather seal and an improved appearance.

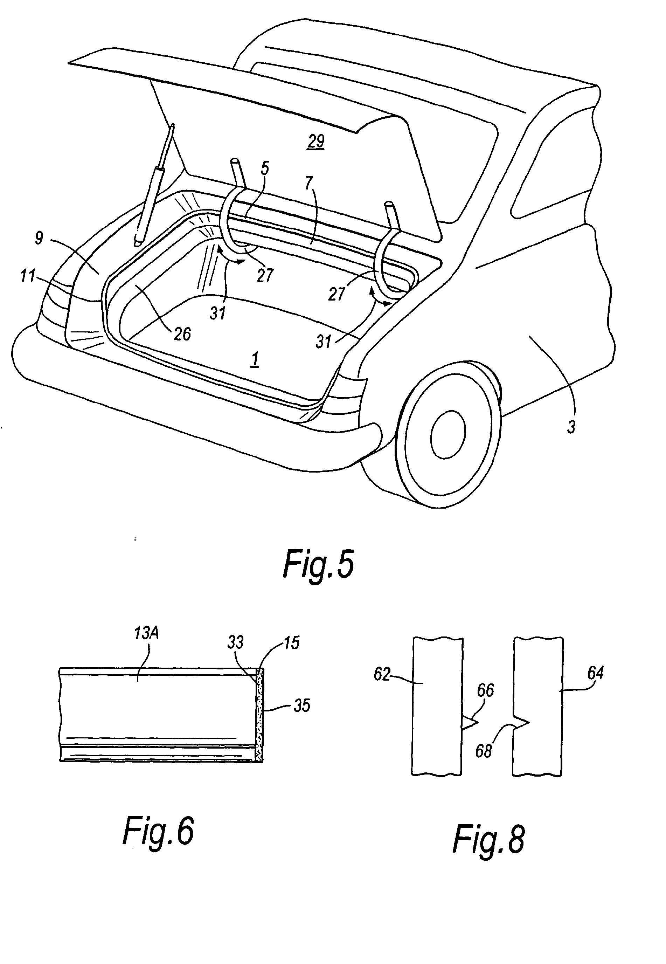

A problem with this known arrangement arises when it is desired to fit a sealing strip 13 to a boot/trunk opening 1 after the boot lid is fitted to the vehicle body 3. This will be explained in more detail with reference to the perspective view of the rear of the vehicle body 3 in Figure 5. A pre-formed looped seal 13 cannot be fitted to the flange 5 surrounding the opening 1 when there is an obstruction around the periphery of the opening 1. Such an obstruction might comprise, for example, the hinge arms 27 that attach the boot/trunk lid 29 to the vehicle body 3 and allow angular movement of the boot/trunk lid 29 with respect to the body 3 in order that the boot/trunk opening 1 can be opened and closed.

The hinge arms 27 may be mounted to the boot/trunk lid 29 by bolts or welding and are coupled to the vehicle body 3 by a hinge arrangement (not shown) that allows rotational movement of the boot-trunk lid 29 and hinge arms 27 in the direction of arrows 31.

One arrangement for fitting a seal 13 to the opening shown in Figure 5 would be to supply the seal 13 as a length of sealing strip where the opposite ends are not joined together (i.e. in un-looped form). The sealing strip 13 can then be threaded behind the hinge arms 27 and fitted to the flange 5. The opposite ends 13A, 13B of the strip 13 will then abut or lie adjacent to one another at some point around the opening 1. As explained above, this is unsatisfactory as it reduces the effectiveness of the weather seal and results in an unattractive visible join or gap between the opposite ends 13A, 13B of the strip 13.

Another potential way of fitting a looped sealing strip in such a situation would be to stretch the sealing strip so that it fits over the boot/trunk lid 29 so that it could subsequently be fitted to the flange 5 despite the presence of hinge arms 27. However, this is generally impracticable. Firstly, there may be other obstructions, such as a hydraulic ram between the boot/trunk lid 29 and the flange 5 which prevent the sealing strip 13 from being fitted to the flange 5. Secondly, even if it is possible to stretch the sealing strip 13 sufficiently to fit it over the boot/trunk lid 29, this is likely to damage the sealing strip and/or break the bond between the ends of the sealing strip and the foil 15. Thirdly, most sealing strips are designed so that they are not stretchable in this manner, and typically include a rigid metal carrier which prevents such stretching.

In accordance with an important feature of the embodiments of the invention, a sealing strip arrangement is provided that has a foil 15 bonded initially to one end 13A (only) thereof. The other end 13B of the strip 13 does not have the foil attached thereto and is available for subsequent bonding to the end 13A having the foil 15 bonded thereto. Figure 6 shows a view of part of such a strip 13 in accordance with the embodiment of the invention. A first surface 33 of the foil 15 is bonded to the face of the end 13A of the strip 13. The opposite surface 35 of the foil 15 is exposed. Such lengths of sealing strip 13 (with the ends unbonded to one another) can be supplied for fitment to boot/trunk openings 1. The configuration of the strip may be as shown in Figure 4. The length of the sealing strip 13 can be threaded behind the hinge arms 27. The end 13A of the sealing strip 13 to which the foil 15 is attached can then be bonded, using the foil, to the other end 13B of the sealing strip (where no foil is present). This bonding of the opposite ends 13A, 13B of the strip 13 is *performed in situ* in the boot opening 1 or by a tool brought to the vicinity of the boot opening 1 in order that the opposite ends 13A, 13B can be bonded together whilst the strip is fitted between the hinge arms 27 and the vehicle body 3. Methods and tools for performing such a bonding operation will be described later.

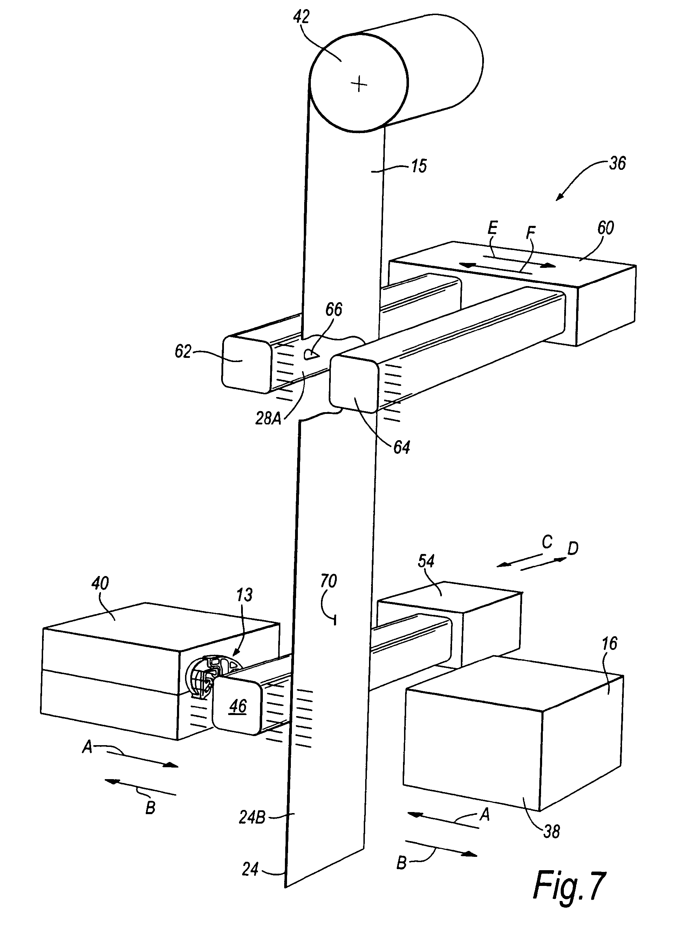

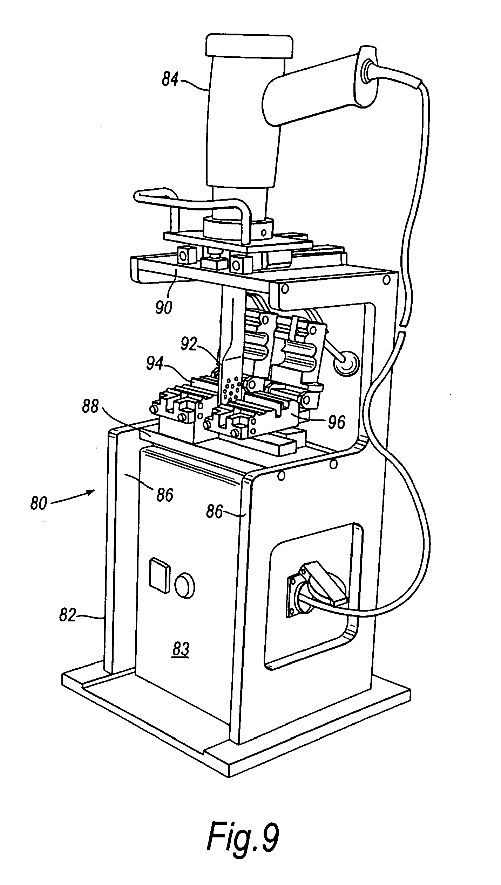

There will now be described, with reference to Figures 7 and 8 an apparatus for forming a sealing strip with a foil 15 at one end thereof as shown in Figure 6. The apparatus 36 comprises a retaining device 40 for receiving and clamping end 13A of the sealing strip 13. The retaining device 40 can be opened to receive the sealing strip 13 section and then closed to clamp the section in position, as shown in Figure 7. A bonding block 38 is provided which faces the end 13A of the sealing strip that emerges from the retaining device 40. The retaining device 40 and bonding block 38 are mounted on slides or similar mechanisms (not shown) so as to be slidable in the directions of the arrows A and B to bring the ends of the clamped sealing profile sections 38,40 towards and away from bonding block 38. A roll 42 of foil 15 is mounted above the retaining device 40 and bonding block 38 by supporting means (not shown).

A heater 48 is positionable between the foil 15 and the strip section mounted in retaining device 40. The heater 48 is mounted on a transporting unit 54, the transporting unit 54 being movable to and fro in the direction of arrows C and D so that the heater 28 can be moved in the direction C into the position shown in Figure 7 and moved in the direction of arrow D so that it clears the space between the retaining device 40 and the bonding block 38.

The foil 15 may be a thermoplastic foil or film, and for example may be made from a polyolefin material or other suitable thermoplastic material.

Between the roll 42, and the retaining devices 38,40, is provided a perforating unit 60. The perforating unit 60 carries two punch support members 62,64, each shaped similarly to heater 48 and respectively carrying one or more punches 66 and one or more recesses 68 (Figure 8).

To form the sealing strip of Figure 6, the end 13A of the strip which is to have the foil 15 bonded thereto, is clamped in the retaining device 40 so that the end 13A protrudes from the retaining device 40 towards the bonding block 38. A length of foil 15 is unwound from the roll 42, generally into the position shown in Figure 7, where it passes between the punch support members 62,64 and the bonding block 38 and retaining unit 40. The punch support members 62,64 are then moved towards each other in the direction of arrows E,F to punch one or more slits, holes or apertures in the foil 15. The punch support members 62,64 are then moved apart again (into the spaced apart position shown in Figure 7) so as to be clear of the foil 15. A slit 70 formed by the punch 66 is shown in Figure 7. As the foil 15 is unwound from the roll 42, the slit 70 moves into the region between the bonding block 38 and the retaining unit 40. The transporting unit 54 is moved in the direction of arrow C so as to bring the heater 48 into the position shown in Figure 7. The heater is then activated. The heater 48 causes heating of the end of the profile section 13A and the foil 15 (at this stage the slit 70 being in a position corresponding to the hollow chamber of the sealing part 23 of the end 13A of the sealing strip 13).

The transporting unit 54 is then withdrawn in the direction of arrow D so that the heater 48 is clear of the space between the retaining device 40 and the bonding block 38. The retaining device 40 (and/or the bonding block 38) is/are then moved towards each other so as to bring the end 13A of the strip 13 into contact with the side 33 of the foil 15 with a predetermined amount of pressure. The heated foil 15 thus thermally bonds to the end 13A of the sealing profile 13. The retaining device 40 and the bonding block 38 are then moved apart. The foil 15 is cut along its length above and below the sealing portion 13 in order to allow the part of the foil now attached to the sealing strip 13 to be separated from the remainder of the foil attached to the roll 42. The sealing strip 13 (with a portion of the foil 15 attached thereto) can then be removed from the retaining unit 40. The excess foil material can then be cut away around the periphery of the sealing strip 13 so that there is only foil 15 present over the end face of the strip 13.

The foil 15 on the roll 42 may be plain foil, without any slits or holes or other apertures therein, these being formed immediately prior to the bonding operation by the punch 66 and the movement of the punch support members 62,64.

Clearly, there can be more than one punch 66 and one matching recess 68, so as to produce a required plurality of slits, holes or other apertures.

The punching action, to form the slits, holes or other apertures in the foil 15, could take place before or after the heating action, although it preferably takes place before the heating action, as described above.

As described with reference to Figures 7 and 8, the holes or other apertures are formed in the foil 15 by a mechanical punching operation. Instead, however, the holes or other apertures could be formed by other suitable nonmechanical means, such as by a jet of air or gas or by an electrical spark arrangement.

The thus formed sealing strip 13 with the foil 15 attached to end 13A thereof can then be supplied for fitting to a boot/trunk opening 1. As mentioned above, the presence of the foil 15 facilitates a bonding of the end 13B of the sealing strip to the end 13A of the sealing strip when the sealing strip 13 is fitted around the hinge arms 27 or other obstructions.

When the sealing strip 13 is formed into a loop, it will have a similar appearance to a known loop sealing strip shown in Figures 2 and 3.

The through slit or slits 70 provided in the foil 15 in the region of the hollow chambe r 23 enables, in the finished joint, air to pass from one side of the foil 15 to the other as shown by arrows X and Y in Figure 3. Therefore, the slits 70 prevent a build up of pressure across the foil 15 in the event of compression of the strip 13. Such compression may take place during fitting of the strips onto the vehicle body and/or in use when the strip 13 is compressed by the closing boot/trunk lid 29. Any such build up in pressure could tend to cause bursting of the foil 15 and rupture of the joint. The slits reduce this risk by allowing air to pass from one side of the foil 15 to the other.

It will be appreciated that the slit or slits 70 could be replaced by slots or other holes, apertures or cut outs. Instead, the foil could be rendered air or gas permeable in some other way.

Figures 9,10 and 11 show a first embodiment of a tool 80 suitable for bonding the ends 13A and 13B of the strip 13 together with the strip is positioned *in situ* in the boot opening and threaded behind the hinge arms 27. It will be appreciated that the apparatus disclosed in EP1284852 is not suitable for performing such an operation because: (1) that apparatus is for bonding a foil simultaneously to both ends of the sealing strip, and (2) that apparatus is not portable and cannot be used on a sealing strip that is treaded behind the hinge arms 27.

The tool 80 is sized such that its base 82 can pass through the boot/trunk opening 1 in the vehicle body 3 and rest on the floor of that opening 1. The base 82 accommodates a power supply 83 for powering a heater 84. Above the base 82 a C-shaped opening is formed in the sidewalls 86 of the tool 80. A first mounting plate 88 extends between the sidewalls at the base of the C-shaped opening and a second mounting plate 90 extends between the sidewalls at the top of the C-shaped opening. The second mounting plate 90 has a hole formed therethrough through which the heating end 92 of the heater 84 extends. On the first mounting plate 88 two retaining devices 94,96 are provided. These retaining devices are of similar configuration to the retaining device 40 described with reference to Figure 7.

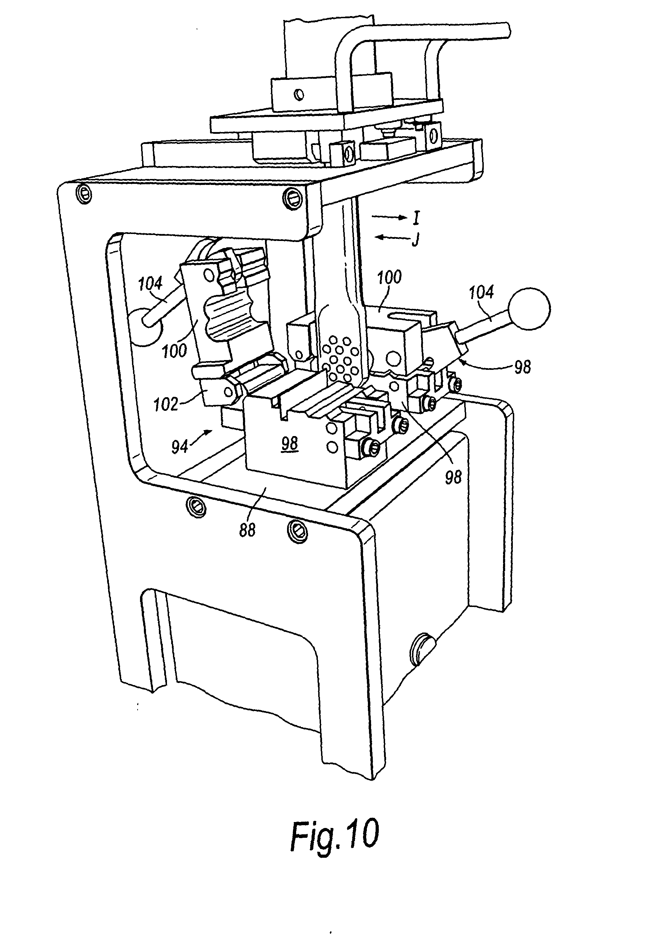

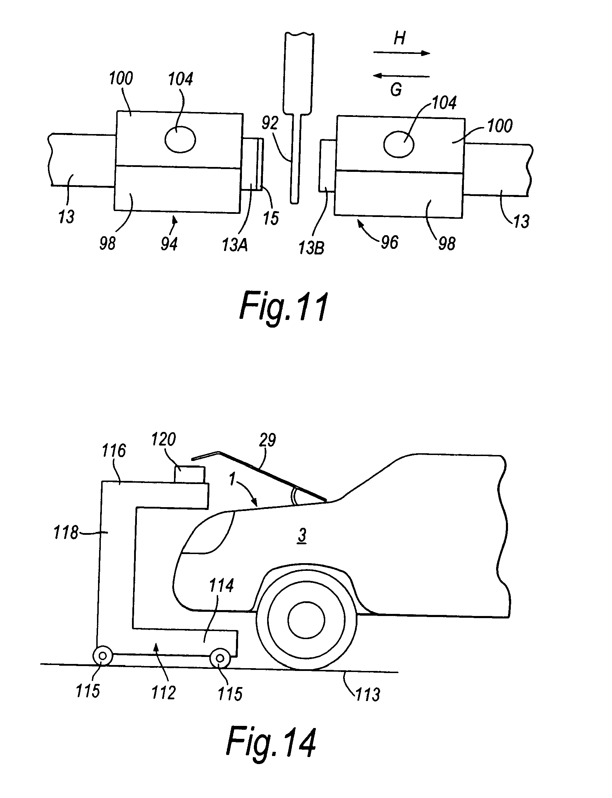

As can be seen in more detail in Figure 10, the retaining device 94 includes a first section 98 and a second section 100 pivotally attached thereto at hinge 102. The end 13A of the sealing strip 13 (with the foil 15 bonded thereto) is positioned in an appropriately-shaped recess in the first section 98 so that the end 13A protrudes slightly from the first section 98, as best seen in Figure 11. The second section 100 (also having an appropriately-shaped recess) is then lowered onto the first section 98 to clamp the end 13A of the sealing strip 13 in position, using the handle 104. The second retaining device 96 has a similar configuration to the first retaining device 98, with like elements being designated with the same reference numeral. The opposite end 13B of the sealing strip 13 is mounted in the second retaining device 96 in a similar manner to the manner in which the end 13A is mounted in the first retaining device 94. However, the second retaining device 96 differs from the first retaining device 94 in that it is mounted to the first mounting plate so as to be slidably movable in the direction of arrows G and H (Figure 11).

With the ends 13A and 13B of the strip 13 clamped in respective retaining devices 94,96, the heating end 92 of the heater 84 is slid in the direction of arrow I into the position shown in Figures 10 and 11 so that it lies between the ends 13A and 13B. The heating device 84 then generates hot air which is emitted from outlets in the heating end 92 and heats the ends 13A and 13B of the strip 13 and the foil 15 attached to end 13A. The heating end 92 is then slid in the direction of arrow J so as to be clear of the space between the retaining devices 94 and 96. The second retaining device 96 is then slid in the direction of arrow G in order to bring the end 13B of the seal 13 into pressurised contact with the foil 15 mounted on the end 13A of the sealing strip 13. The first sections 100 of the retaining devices 94,96 can then be opened (to the position shown in Figure 10) and the sealing strip 13 (now formed in a continuous loop) can be removed from the tool 80. The tool 80 can then be removed from the boot/trunk opening 1.

Advantageously, when the heating end 92 is moved into position between the retaining devices 94,98 the heating function is automatically activated. Likewise, when the heating end 92 is moved away from the space between the retaining devices 94,96, it is automatically deactivated.

The thus formed looped strip 13 can then be fitted to the flange 5 by any suitable means.

The sealing strip 13 may have the general form described in GB 2212844, where the sidewalls of the channel are splayed apart so as to enlarge the mouth of the channel and easing its application onto the mounting flange.

The sealing strip 13 can then be securely fitted to the flange 5 by using a suitable tool for pressing the sidewalls of the channel together, such as a tool disclosed in EP 1115589 or EP 0497048. However, it should be noted that such tools are not suitable for fitting a strip to a flange in the region of an obstruction such as hinge arms 27. In the region of the hinge arms, the sealing strip may be securely fitted to the flange 5 using the tool disclosed in our co-pending patent application No. GB 0514295.5 entitled "Fitting of Flexible Strips" filed on 12th July 2005.

The heating end 92 of the heater 84 may provide heat other that by emission of hot air. For example, a heating element which generates radiant heat may be used.

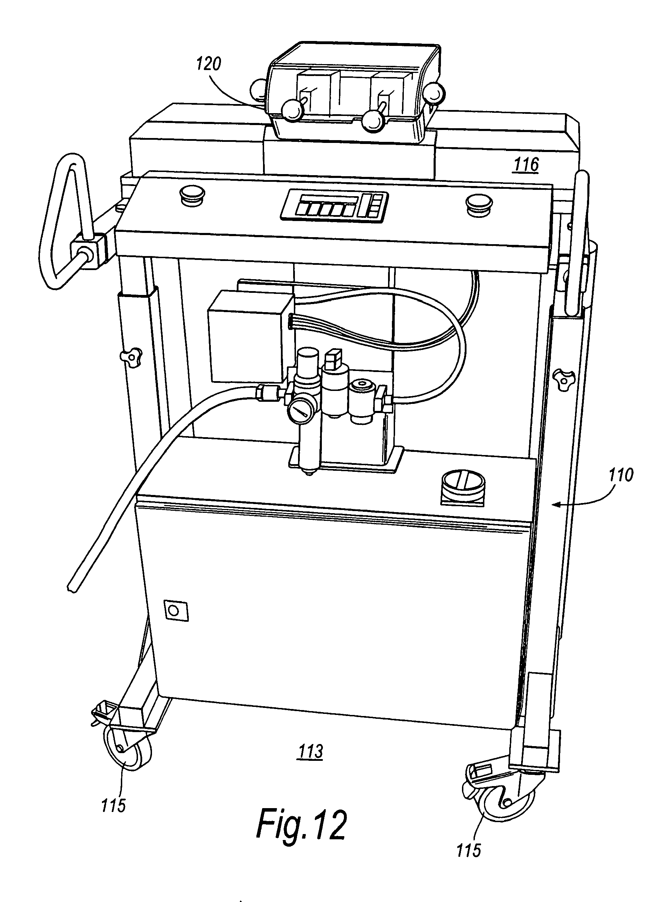

Figures 12,13 and 14 show a second embodiment of apparatus 110 for joining the opposite ends 13A,13B of the strip 13 when it is positioned *in situ* in the region of the boot opening 1 and mounted around the hinges arms 27. As best seen in Figure 14, the apparatus comprises a C-shaped frame 112. The lower limb 114 of the frame 112 lies generally parallel to the ground 113 in use and has wheels or rollers 115 fitted thereto to allow the frame 112 to roll along the ground 113. The lower limb 114 of the frame 112 is configured so as to be slidable in the space between the ground 113 and the underside of the vehicle body 3. The upper limb 116 of the frame 112 extends generally parallel to the lower limb 114 and is spaced apart therefrom by connecting limb 118. The upper limb 116 is sized and configured to enter the boot/trunk opening 1. On the upper surface of the upper limb 116 is carried a sealing strip joining device 120. Conveniently, the frame 112 is moved along the ground 113 in order to bring the joining device 120 into a position in the boot/trunk opening 1. This enables the ends 13A and 13B of a seal 13 positioned so that it is threaded behind the hinge arms 27 to be bonded together to form a continuous sealing loop *in situ.*

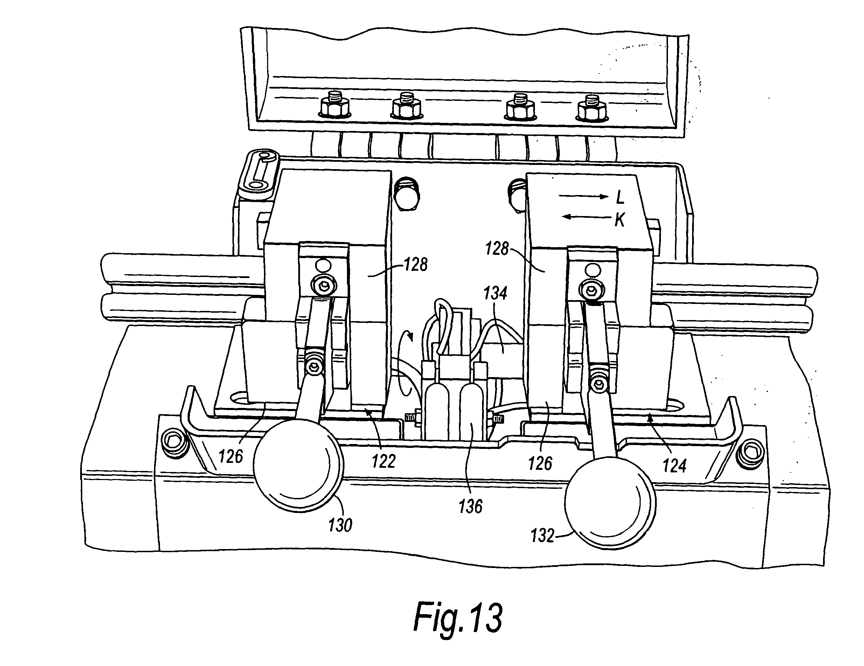

The joining device comprises first and second strip retaining devices 122, 124. A first section 126 of the first retaining device 122 is fixed to the upper limb 116. A second section 128 is pivotally attached to the first section 126 in order to allow the sections 128,126 to be separated and the end 13A of the seal (with the foil 15 attached thereto) to be mounted securely in a recess in the retaining device 122. The second retaining device 124 has similarly configured first and second sections 126,128 for clamping the opposite end 13B of the sealing strip 13. However, the first section 126 of the second retaining device 124 is slidable in the direction of arrows K and L (Figure 13). The handles 130, 132 of the respective retaining devices 122,124 allow the retaining devices 122,124 to be opened and closed. Further the handle 132 of the second retaining device 124 provides for rotation of mounting bar 134 to which heating elements 136 are mounted.

When the ends 13A and 13B of the sealing strip 13 are mounted in the retaining devices 122 and 124, the handle 132 is rotated in order to cause corresponding rotation of the mounting bar 134. This brings the heating elements 136 into a position between the opposite ends 13A and 13B of the sealing strip and heats those ends. The heating elements 136 are then pivoted away from the gap between the retaining devices 122 and 124 (into the position shown in Figure 13), whereafter the second retaining device 124 is slid towards the first retaining device 122 in order to bring the end 13B of the sealing strip 13 into contact with the foil 15 attached to the end 13A of the sealing strip 13. After a short time, the now bonded ends 13A,13B of the sealing strip are removed from the retaining devices 122,124. The thus formed looped sealing strip 13 can then be mounted to the flange 5 of the boot/trunk opening 1. Tools of the type referred to above can be used to fit the sealing strip 13 to the flange 5 in the manner described above.

The foil 15 used in any of the embodiments may be of any suitable type for ensuring an effective bond, taking into account the material and characteristics of the sealing profile 13. It may, for example, have a melting point of between 120 and 130°C. The apparatus and method described can provide a very quick curing joint (in four to five seconds) and which is immediately capable of withstanding loads. The need for vulcanisation is avoided.

Although the embodiments described have referred to the fitting of sealing strips to the opening 1 of a boot/trunk of a motor vehicle 3, it should be appreciated that the invention is also applicable to the fitting of sealing strips around other openings, such as door openings. The hinges that attach the door to a door frame of a vehicle may provide an obstruction in the door opening similar to the hinge arms 27 of the boot opening 1 described above.

It should further be appreciated that, although the arrangements described above are particularly advantageous when it is not possible to supply and fit a pre-formed looped sealing strip (by virtue of the presence of obstructions such as hinge arms 27 or other hinges), the apparatus and methods described could of course be used to fit a sealing strip around an opening and to form that sealing strip into a loop even when no obstruction is present.

## Claims

1. Apparatus for forming a looped sealing, trimming or guiding strip from a length of strip (13) having first (13A) and second (13B) ends, the first end (13A) having an end face with a heat-bonding sheet of material (15) bonded to that end face, the apparatus including means (94,96) for positioning the first and second ends (13A,13B) of the strip (13) so that the end faces thereof are generally aligned, means (92) for applying heat to at least one of the respective end faces (13A,13B) and/or the sheet of material (15), and means for pressing the first and second ends (13A,13B) of the strip (13) together such that the sheet of material (15) bonds the ends of the strips together, thereby forming said loop.

2. The apparatus of claim 1, wherein the apparatus is portable.

3. The apparatus of claim 1 or 2, wherein the apparatus includes wheel or roller means (115) for allowing the apparatus to be positioned for allowing the loop to be formed *in situ.*

4. The apparatus of claim 1, 2 or 3, wherein the apparatus has a weight that allows it to be lifted by a single person.

5. The apparatus of any one of claims 1 to 4, wherein the heating means (92) comprises a hot air generator.

6. The apparatus of any one of claims 1 to 5, wherein the heating means (92) is positionable between the sheet of material (15) and the second end (13A) of the strip for performing heating thereof.

7. A method of sealing around an opening (1) in a motor vehicle body (3) having an obstruction (27) in the region of the opening (1), the method including providing a sealing strip (13) having first (13A) and second (13B) ends, the first end (13A) having an end face with a heat bonding sheet of material (15) bonded to that end face, positioning the strip (13) around the obstruction (27), bonding the first end (13A) of the strip to the second end (13B) of the strip using the sheet of material (15) by applying heat thereto, and mounting the thus formed looped strip to a mount (5) around the periphery of the opening (1).

8. The method of claim 7, wherein the obstruction (27) comprises hinge means.

9. The method of claim 8, wherein the opening (1) is a boot or trunk opening and the hinge means (27) comprises a hinge arm.

10. The method of claim 8, wherein the opening is a door opening and the hinge means comprises a hinge.

11. The method of claim 7, 8, 9 or 10, wherein the bonding step is performed after the closure member of the opening is mounted to the vehicle body.

12. The method of claim 7, 8, 9, 10 or 11, wherein the bonding step is performed in the vicinity of the vehicle body.

13. A sealing, trimming or guiding strip (13) having an end face (13A) with one surface (33) of a heat-bonding sheet of material (15) bonded to said end face (13A), the other surface (35) of the sheet being unbonded and available for subsequent bonding to another end face.

14. The strip of claim 13, wherein said other end face is another end face (13B) of the said strip (13).

15. The strip of claim 14, wherein the strip (13) is formable into a loop.

16. The strip of claim 13,14 or 15, wherein said sheet (15) of material is air permeable.

17. The strip of claim 13,14,15 or 16, wherein said sheet (15) of material has one or more perforations therein.

18. The strip of claim 17, including a hollow chamber, and wherein said perforation allows the passage of air through said chamber.

19. The strip of any one of claims 13 to 18, wherein the foil (15) comprises thermoplastic material.

20. The strip of any one of claims 13 to 19, wherein the strip (13) includes a channel-shaped gripping or mounting section (17) for mounting the strip (13) to a mount or flange of a body, such as a vehicle body.

21. The strip of any one of claims 13 to 20, including a relatively rigid reinforcement member or carrier (21) embedded in the strip (13).

22. The strip of any one of claims 13 to 21, wherein the strip (13) is formed by extrusion.

23. The strip of any one of claims 14 to 22, wherein the end faces (13A,13B) of the strip (13) are joined by the sheet of material (15) such that corresponding parts of the end faces are aligned with one another.

24. The strip of claim 23, when dependent of claim 18, wherein the hollow chambers at the end faces are aligned with one another, the perforation allowing the passage of air between the respective hollow chambers.

25. Apparatus for forming a sealing, trimming or guiding strip (13) with a heat-bonding sheet of material (15) at an end face (13A) thereof, the apparatus including clamping means (40) for positioning the strip (13), means (42) for providing the sheet of material in the region of the end face (13A), means (46) for heating the end face of the strip (13A) and/or the sheet of material (15), and means (38) for pressing the sheet of material (15) against the end face (13A) of the strip (13), such that the strip (13) is formed with the sheet of material (15) bonded to one end face (13A) only thereof.

26. The apparatus of claim 25, wherein the heating means (46) is movable between a heating position in which it heats the sheet of material (15) and the end (13A) of the strip (13) and a second position which allows the pressing means (38) to press the sheet of material (15) against the end (13A) of the strip (13).

27. The apparatus of claim 25 or 26, further including aperture-forming means (60,62,64,66) for forming one or more apertures (70) in the sheet of material (15) to allow the passage of air through the sheet of material (15).

28. The apparatus of claim 27, wherein the aperture-forming means (60,62,64,66) is operable to form the aperture (70) in the sheet of material (15) prior to the part of the sheet of material having the aperture (70) being bonded to the end face (13A) of the strip (13).

29. The apparatus of any one of claims 27 to 28, wherein the aperture-forming means (60,62,64,66) comprises mechanical punching means.

30. The apparatus of any one of claims 27 to 29, including a reel from which the sheet of material (18) may be unwound into a position between the aperture-forming means and between the pressing means (38) and the end (13A) of the strip (13).

31. The apparatus of any one of claims 25 to 30, wherein the sheet of material (15) is air-permeable.

32. A method for forming a sealing, trimming or guiding strip (13) with a heat-bonding sheet of material (15) at an end face (13A) thereof, the method including clamping the strip (13) in position, providing the sheet of material (15) in the region of the end face (13A) of the strip (13), heating the end face (13A) of the strip (13) and/or the sheet of material (15), and pressing the sheet of material (15) against the end face (13A) of the strip (13), such that the strip (13) is formed with the sheet of material (15) bonded to one end face (13A) only thereof.

33. The method of claim 32, including moving heating means (46) between a heating position in which it heats the sheet of material (15) and the end (13A) of the strip (13) and a second position which allows the sheet of material (15) to be pressed against the end (13A) of the strip (13).

34. The method of claim 32 or 33, further including forming one or more apertures (70) in the sheet of material (15) to allow the passage of air through the sheet of material.

35. The method of claim 34, wherein the aperture-forming step forms the aperture (70) in the sheet of material (15) prior to the part of the sheet of material (15) having the aperture (70) being bonded to the end face (13A) of the strip (13).

36. The method of any one of claims 32 to 35, wherein the aperture (70) is formed by mechanical punching means (66).

37. The method of any one of claims 32 to 36, wherein the sheet of material (15) is unwound from a reel (42) into a position where the aperture (70) is formed and then into a position where the sheet of material (15) is bonded to the end (13A) of the strip (13).

38. The method of any one of claims 32 to 37, wherein the sheet of material (15) is air-permeable.

39. The method of any one of claims 7 to 12, wherein the sealing strip is as claimed in any one of claims 13 to 24.

40. The method of any one of claims 7 to 12, wherein the sealing strip is formed by the apparatus of any one of claims 25 to 30 or by the method of any one of claims 32 to 38.
